# EUROPEAN PATENT APPLICATION

(11) **EP 4 151 797 A1**
(43) Date of publication of application: **22.03.2023**
(21) Application number: 21197198.1
(22) Date of filing: 16.09.2021
(51) Int. Cl.: D06M 11/13, D06M 13/188, D06M 15/356, D06M 15/61, D06M 16/00, A01N 33/12, A01P 1/00

(54) **ANTIMICROBIAL TEXTILES WITH ADHERED POLYCATIONIC POLYMERS AND SUBJECTED TO AN ACID TREATMENT**

(71) Applicant: Livinguard AG, 6330 Cham (CH)
(72) Inventor: GAELLI, René, 6330 Cham (CH); ZABARA, Mahsa, 6330 Cham (CH); LUTZ, Rene, 6330 Cham (CH); SWAMY, Sanjeev, 6330 Cham (CH)
(74) Representative: Bardehle Pagenberg Partnerschaft mbB Patentanwälte Rechtsanwälte

(57) **Abstract**

Disclosed is a textile material to which a polycationic polymer like polyvinyl amine (PVAm), polyallylamine (PAA), and pollydiallylamine (PDAm), is adhered and which is subsequently subjected to an acid treatment, which lowers the pH of textile after the treatment with the polycationic polymer. The agents are adhered to the substrate in such a manner that they are not released from the textile even if the textile is wetted or washed, so that the textile is reusable. Due to the low toxicity of such antimicrobial agents, the textile material can be used, e.g., for food contact, or in a reusable sanitary napkin, period panties or other hygiene products.

## Description

### FIELD OF THE INVENTION

The present invention is directed to a textile material to which a polycationic polymer like polyvinyl amine (PVAm), polyallylamine (PAA), and pollydiallylamine (PDAm), is adhered and which is subsequently subjected to an acid treatment, which lowers the pH of textile after the treatment with the polycationic polymer. The agents are adhered to the substrate in such a manner that they are not released from the textile even if the textile is wetted or washed, so that the textile is reusable. Due to the low toxicity of such antimicrobial agents, the textile material can be used, e.g., for food contact, or in a reusable sanitary napkin, period panties or other hygiene products. The use of a polycationic polymer allows a long-term antimicrobial activity as adhered agents are chemically stable and non-volatile.

### BACKGROUND OF THE INVENTION

Disinfectants are widely used in daily life to prevent the spread and infection of microorganisms, such as in the healthcare sector, food industry, agriculture or ordinary household products.

However, a major problem caused by the widespread use of disinfectants is the continuous pollution of the environment by these disinfectants. Usually, the disinfectant is provided in the form of a solution and applied directly to contaminated surfaces, such as hospital or laboratory equipment or skin wounds. If these disinfectants are not neutralized, for example by autoclaving, or are not easily neutralized, they will eventually accumulate in the wastewater. Similarly, materials with biocidal functions (such as antibacterial plastics), coatings or textiles (such as in the food packaging industry), wound dressings or functional clothing will accumulate in the environment, and in addition, the antibiotics used in these materials will continue to leach. Such contamination may eventually lead to the emergence of microbial strains resistant to commonly used antibacterial agents.

In the prior art, several methods for preparing antibacterial textile materials are known. However, these methods mainly rely on the use of synthetic antimicrobial agents, which are not easily degraded in the environment. Moreover, many antimicrobial agents known in the prior art are not approved for use as food additives or preservatives, and therefore cannot be used in combination with food packaging. Therefore, an antimicrobial textile using environmentally friendly and very low-toxicity chemical reagents is needed. The agent imparting antimicrobial function to the textile is preferably a natural organic compound. These compounds are generally biodegradable, thereby reducing the risk of accumulation and environmental pollution. The obtained antibacterial textile should be well tolerated by biological tissues, and can be used, for example, in sensitive applications, such as antiseptic packaging of food. In addition, the production of such antimicrobial textiles should be cost-effective, especially in terms of the cost of the chemical reagents used.

EP3795741A1 by the same applicant describes a textile finishing process that allows a stable and wash-durable binding of certain antimicrobial agents. While the antimicrobial activity proved high, the antimicrobial agents described in EP3795741A1, such as propiconazole or silver ions, turned out less preferable. This is in particular because there exist environmental concerns using small molecule biocides which may be released into the surroundings.

WO2019180036A1 by the same applicant describes a textile finishing process that allows a stable and wash-durable binding of certain organic antimicrobial agents. However, the process relies in part on the agent Chitosan, which is expensive.

Timma et al. describe the preparation of nonfouling textiles using polyvinylamine-based polymers (RSC Adv., 2019, 9, 9783). The polymers are applied to cotton and PET-textiles by padding and drying at 150 °C. Cotton fabrics are pretreated with cyanuric trichloride before application of the PVAm derivatives. Furthermore, the antimicrobial activity of the textile is not very high.

It would be desirable to have wash-durable textile materials with strong antimicrobial properties, which are environmentally friendly, have a very low toxicity, and which are inexpensive to produce.

### SUMMARY OF THE INVENTION

It is an object of the invention to provide textile materials that overcome some or all problems of the above-mentioned prior art documents. In particular, one object of the invention is to provide substrates exhibiting strong antimicrobial properties even after numerous washes. The substrate should prohibit growth of bacteria, smells, odors etc. as completely as possible. In particular, one object of the invention is to provide substrates exhibiting antibacterial properties even after numerous washes. The substrate should prohibit growth of bacteria, smells, odors etc. as completely as possible. It is another object that the substrates are environmentally friendly and have a very low toxicity. Finally, the textile should be inexpensive in the production.

The inventors have found that adhering polycationic polymers, like polyvinyl amine (PVAm), polyallylamine (PAA), and polydiallylamine (PDAm), to a textile material results in a material that exhibits good antimicrobial activity. At the same time, these agents have a very low toxicity and are biodegradable. Moreover, the inventors discovered that polycationic polymer coated textile materials exhibit a basic pH of typically above 8 that can be reduced to an acidic pH value of typically between 6 and 6.5 by an acid treatment of the polymer coated textile material. Preferably this acid treatment is conducted by rinsing the textile material in an aqueous solution containing an acid. Preferred acids are acetic acid, citric acid and hydrochloric acid. The acid treatment protonates the polycationic polymer coated textile, such that it exhibits a positive surface charge. The claimed adhered polycationic polymers can be particularly well protonated by an acid treatment. The positive surface charge of the polymer coated textile material having an acidic pH value has much improved antimicrobial properties over a corresponding polymer coated textile material that has not been subjected to acid treatment, i.e. that exhibits an alkaline pH.

The most preferred acid to be used for the acid treatment according to the invention is acetic acid as acetic acid remaining on the polymer coated textile material following the acid treatment evaporates residue-free.

Unless otherwise stated, all percentages hereinafter refer to the ratio of the uptaken weight of antimicrobial agent on a substrate and the weight of that substrate without the uptaken antimicrobial agent. The term "on weight fabric" refers to this ratio. Abbreviations are "owf' or "o.w.f". The term "gpl" means "grams per liter" and is typically used to define the concentration of a substance in a liquor.

In the context of the present invention the terms "textile" and "textile material" relate to a flexible material consisting of fibres, or a network of natural and/or artificial fibres, such as a yarn or a fabric. The material may be in its natural or processed or even finished form.

The term "starting (textile) material" or "starting substrate" refers to a (textile) material which has not yet been treated by the finishing processes described in the present disclosure.

The term "antimicrobial" as used in the context of the present invention relates to the ability to kill at least some types of microorganisms, or to inhibit the growth or reproduction of at least some types of microorganisms. Said term relates to any compound, agent, product or process that is harmful to one or more "microorganism" as used in the context of the present invention. Preferably, the one or more "microorganisms" get killed by the "antimicrobial" product or process. By "antimicrobial agent" is meant any substance or combination of substances that kills or prevents the growth of a microorganism. The terms "microorganism" and "microbe", which are used interchangeably in the context of the present invention, are defined to comprise any organism too small to be seen by the unaided eye, such as, especially, single-celled organisms. In particular, the terms "microorganism" and "microbe" cover prokaryotes including bacteria and archaea, eukaryotes including protists, animals like dust mites or spider mites, fungi, and plants like green algae, as well as viruses.

Whenever a temperature is mentioned in the present specification, the temperature refers to a temperature applied at normal pressure (101.325 Pa). If in an implementation of the invention higher or lower pressure is applied, the temperatures are understood to be adapted accordingly.

A 1st embodiment of the invention is a textile material to which an antimicrobial agent is adhered, wherein the antimicrobial agent is a polycationic polymer.

According to a 2nd embodiment, in the preceding embodiment, the textile material has a pH of between 5 and 7, preferably between 5.5 and 6.8, most preferably between 6 and 6.5.

According to a 3rd embodiment, in any one of the preceding embodiments, the polycationic polymer is selected from the group consisting of polyvinyl amine (PVAm), polyallylamine (PAA), and polydiallyl amine (PDAm) and/or not selected from the group consisting of an organosilane compound, polyglucosamine (Chitosan), and polyhexamethylene biguanide (PHMB).

According to a 4th embodiment, in any one of the preceding embodiments, the polycationic polymer is polyvinyl amine (PVAm).

According to a 5th embodiment, in any one of the preceding embodiments, the amount of the antimicrobial agent adhered to the textile material is at most 4.0%, preferably at most 3.0%, more preferably at most 2.5%, and most preferably at most about 2.0% on weight fabric of the textile material, and/or wherein the amount of the antimicrobial agent adhered to the textile material is at least 0.1%, preferably at least 0.2%, more preferably at least 0.3%, and most preferably at least 0.4% on weight fabric of the textile material.

According to a 6th embodiment, in any one of the preceding embodiments, the antimicrobial agent adhered to the textile material increases the reduction value and/or the textile material exhibits a reduction value of Escherichia coli ATCC 25922 measured in accordance with AATCC test method 100-2012 by/of at least 99% (2 log), preferably at least 99.9% (3 log), and even more preferably at least 99.99% (4 log), and most preferably at least 99.999% (5 log) within 1 hour of contact time and/or within 24 hours of contact time.

According to a 7th embodiment, in the preceding embodiment, the antimicrobial efficiency is achieved even after at least 25, preferably at least 30 laundry washes in a laundry washing machine at 85±15 °C for 10-15 minutes, preferably using Tergitol 15-S-9 of Dow Chemicals, non-antimicrobial, non-ionic and non-chlorine containing laundry detergent, preferably followed by a standard rinse cycle and preferably dried at 62-96 °C for 20-30 minutes.

According to an 8th embodiment, in any one of the preceding embodiments, the starting textile material is a cellulosic substrate, a synthetic substrate, in particular polyamide or polyester, or a blend of cellulosic substrate and synthetic substrate. According to a 9th embodiment, in the preceding embodiment, the cellulosic substrate is or comprises cotton, viscose, rayon, linen, hemp, ramie, jute, and combinations (blends) thereof.

According to a 10th embodiment, in the 8th or 9th embodiments, the synthetic substrate comprises one or more selected from the group consisting of polyester, polyamide (nylon), acrylic polyester, spandex (elastane, Lycra), aramids, modal, sulfar, polylactide (PLA), lyocell, polybutyl tetrachloride (PBT), and combinations (blends) thereof, preferably polyester or polyamide (nylon), most preferably polyester.

According to an 11th embodiment, in any one of the preceding embodiments, the textile material is selected from woven, knitted, warp knitted, crocheted, and non-woven fabrics.

A 12th embodiment of the invention is a method for manufacturing an antimicrobial textile material, comprising treating the textile material in a main liquor application cycle comprising the steps of:
- treating the textile material using a liquor application process, preferably exhaustion or padding, wherein the liquor comprises a polycationic polymer;
- subjecting the treated textile material to a heat treatment.

According to a 13th embodiment, in the preceding embodiment, the polycationic polymer is selected from the group consisting of polyvinyl amine (PVAm), polyallylamine (PAA), and polydiallyl amine (PDAm)

According to a 14th embodiment, in the preceding embodiment, the polycationic polymer is polyvinyl amine (PVAm).

According to a 15th embodiment, in any one of the 12th to 14th embodiments, the liquor of the main liquor application cycle has a pH value of between 5.5 and 8.0, preferably 6.0 and 7.6, more preferably between 6.5 and 7.2, if the polycationic polymer is polyvinyl amine (PVAm)

According to a 16th embodiment, in any one of the 12th to 15th embodiments, the liquor of the main liquor application cycle has a pH value of between 9.0 and 12.0, preferably between 10.0 to 11.5, more preferably between 10.5 and 11.2, if the polycationic polymer is polyallylamine (PAA), or polydially lamine (PDAm).

According to a 17th embodiment, in any one of the 12th to 16th embodiments, the concentration of the polycationic polymer in the liquor of the main liquor application cycle is 0.1 to 3 g/L, preferably 0.4 to 2 g/L, more preferably 0.7 to 1.3 g/L.

According to an 18th embodiment, in any one of the 12th to 17th embodiments, the heat treatment of the main liquor application cycle comprises drying and/or curing, preferably drying and curing.

According to a 19th embodiment, in any one of the 12th to 18th embodiments, the heat treatment of the main liquor application cycle is carried out at least partially at a temperature of at least 110 °C, preferably at least 120 °C, more preferably at least 130 °C, and most preferably at least about 140 °C and/or a temperature of at most 190 °C, preferably at most 170 °C, more preferably at most 160 °C, and most preferably at most about 140 °C.

According to a 20th embodiment, in any one of the 12th to 19th embodiments, the heat treatment is carried out for a duration of 0.5 to 10 minutes, preferably 1 to 8 minutes, more preferably 2 to 6 minutes.

According to a 21st embodiment, in any one of the 12th to 20th embodiments, the starting textile material consists of or comprises polyester, polyamide and/or a cellulosic material.

According to a 22nd embodiment, in any one of the 12th to 21st embodiments, after the main liquor application cycle, the textile material is treated, preferably rinsed, with an aqueous solution containing an acid.

According to a 23rd embodiment, in the preceding embodiment, the acid is selected from acetic acid, citric acid, hydrochloric acid.

According to a 24th embodiment, in the preceding embodiment, the acid is acetic acid.

According to a 25th embodiment, in any one of the 22nd to 24th embodiments, the pH of the acid containing aqueous solution is adjusted to between 4.5 and 6.8, preferably between 5 and 6.6, more preferably between 5.2 and 6.5.

According to a 26th embodiment, in any one of the 22nd to 25th embodiments, after the treatment with the acid containing aqueous solution, the pH of the textile material has a value of between 5 and 7, preferably between 5.5 and 6.8, most preferably between 6 and 6.5.

According to a 27th embodiment, in any one of the 22nd to 26th embodiments, before the treatment with the acid containing aqueous solution, the pH of the textile material has a value of between more than 7, preferably at least 7.2, more preferably at least 7.5, even more preferably at least 8.0, and most preferably at least 8.5.

According to a 28th embodiment, in any one of the 22nd to 27th embodiments, the treatment with the acid containing aqueous solution lowers the pH of the textile by at least 0.5, preferably at least 1.0, more preferably by at least 1.5.

According to a 29th embodiment, in any one of the 22nd to 28th embodiments, the acid containing aqueous solution essentially does not comprise polycationic polymers and/or other antimicrobial agents.

According to a 30th embodiment, in any one of the 22nd to 29th embodiments, the acid containing aqueous solution essentially does not comprise any agents than acid.

According to a 31st embodiment, in any one of the 22nd to 30th embodiments, the treatment with the acid containing aqueous solution is performed in the same continuous process as the steps of the main liquor application cycle.

According to a 32nd embodiment, in any one of the 22nd to 31st embodiments, the treatment with the acid containing aqueous solution is performed during batch processing of the textile material.

According to a 33rd embodiment, in any one of the 22nd to 32nd embodiments, the treatment with the acid containing aqueous solution is performed prior to manufacturing an end product from the textile material.

According to a 34th embodiment, in any one of the 22nd to 33rd embodiments, the treatment with the acid containing aqueous solution is performed prior to washing the textile material for the first time with the help of a detergent.

According to a 35th embodiment, in any one of the 22nd to 34th embodiments, the treatment with the acid containing aqueous solution is performed within 12 hours, preferably within 5 hours, more preferably within 2 hours, even more preferably within 1 hour, in particular within 30 minutes after treating the textile material in the main liquor application cycle.

According to a 36th embodiment, in any one of the 22nd to 35th embodiments, the method further comprises cutting the textile material and/or manufacturing an end product from the textile material after the treatment with the acid containing aqueous solution.

According to a 37th embodiment, in any one of the 13th to 36th embodiments, after the main liquor application cycle, the textile material is washed, preferably by rinsing the textile material with an aqueous solution, preferably water.

According to a 38th embodiment, in the preceding embodiment and any one of the 22nd to 36th embodiments, the step of washing the textile material is performed prior to the treatment with the acid containing aqueous solution.

A 39th embodiment of the invention is a textile material obtainable by the method of any one of the 12th to 38th embodiments.

According to a 40th embodiment, in the preceding embodiment, the textile material is a textile material according to any one of the 1st to 11th embodiments.

A 41st embodiment of the invention is a product, in particular an end product like an incontinence pad, period panty, sanitary napkin panty, underwear liner, nappy, diaper, diaper liner, adult diaper, bed pad, or nursing pad comprising a textile material according to any one of the 1st to 11th embodiments or the 39th or 40th embodiments.

According to a 42nd embodiment, in the preceding embodiment, the textile material is provided as a liquid absorption layer, in particular body liquids absorption layer.

A 43rd embodiment of the invention is the use of the textile material according to any one of the 1st to 11th embodiments or according to the 39th or 40th embodiments for contact with food and beverages, in particular for manufacturing, processing and/or wrapping food and beverages.

A 44th embodiment of the invention is a product, in particular an end product, comprising a textile material according to any one of the 1st to 11th embodiments or the 39th or 40th embodiments, wherein the product is selected from air filter, water filter, face mask, gloves, medical gown, undergarment, socks, medical garment, military garment, airline personnel garment, T-shirt, bedding, bedsheets, pillow cover, quilt cover, curtains, children's clothing, school uniform, bathing towel, foot rug, upholstery, architectural fabrics, a tent or an awning, fitness gear, a fitness mat or a boxing glove, canine bed, bandages, or diapers for incontinence, kitchen or bakery textile, towel, apron or oven mitt.

### EXAMPLES

A series of different materials were finished and tested according to the test protocols stated herein. All finished materials were treated with antimicrobial agents. The materials were produced under laboratory conditions closely simulating the finishing processes described below.

### Chemicals

Chemicals used for the examples and mentioned in the tables comprise the following:
"Lupamin^{™}" of BASF: a solution comprising 20% of the polycationic polymer polyvinylamine;
Recipes are stated in the below tables. Percentages refer to the weight of the chemicals relative to the weight of the textile material ("o.w.f.") if not otherwise stated. The percentages of active agents which were used can be calculated with the concentration of actives in the chemicals as specified above. The expression "gpl" refers to the amount of a chemical in a liquor.

### Test protocols

The underlying test protocols are generally publicly available from the American Association of Textile Chemists and Colorist (AATCC) and the American Society for Testing and Materials (ASTM).

All microbiological tests were performed with cultures of the bacteria *Escherichia coli* American Type Culture Collection (ATCC) 25922.

Stain release properties were measured according to AATCC 130; water absorbency was measured according to AATCC 79.

Antimicrobial activity of textiles were measured according to AATCC 100-2012.

### Example 1: Antimicrobial activity of textiles treated with a one-cycle padding process with or without acid treatment after 1 h and after 24 h of contact time

The starting material of Working Example 0 was a fabric of 100% polyester.

In a first process cycle, the fabric was padded and then cured.

The padding liquor comprised 20 gpl Lupamin^{™}, i.e. 4 gpl polyvinylamine. The pH was about pH 7 (not further adjusted). The inventors found that for the application of polyvinylamine an essentially neutral pH is preferred. The temperature of the liquor was at room temperature. The padding mangle pressure was 2 bar. 1 cycle of nip and dip was performed. The padded textile passing through a stenter at a velocity of 20 meters per minute and at a temperature of 140°C for 2 minutes.

The padded and cured textile was then rinsed by passing it through water baths [temperature, velocity, time, etc.]. In the first water bath, the pH of the water was reduced with xx gpl acetic acid to a pH of 6.5. Then, the padded, cured, acetic acid treated textile was then passed through a second water bath containing only deionized water.

The textile was washed 30 times before testing the antimicrobial activity according to AATCC100 (1 hour and 24 hours contact time, E. coli). Here, the inoculum density at 0 minute contact time was 5.74 log (5.50 × 10⁵ CFU/mL) when tested for 1 hour contact time (AATCC 100-2012), and 5.63 log (4.31 × 10⁵ CFU/mL) when tested for 24 hour contact time (AATCC 100-2012).

The finishing process is summarized in the below table 1.

**Table 1.**

| **Sample** | | **E1** | **E2** | **E3** |
|---|---|---|---|---|
| Textile Material | | 100% PES | 100% PES | 100%PES |
| Padding | Lupamin | - | 20 g/L | 20 g/L |
| Padding temperature | | - | RT | RT |
| pH of padding liquor | | - | 7 | 7 |
| Pressure | | - | 2 | 2 |
| No. of Nib Dip | | - | 1 | 1 |
| Drying Temp | | - | 150 C | 150 C |
| Drying speed | | - | 20 meters/min | 20 meters/min |
| Curing Temp | | - | 140 C | 140 C |
| Curing speed | | - | 10 meters/min | 10 meters/min |
| Rinsing process with water: | | | | |
| Rinse in water with acetic acid added to pH 6.5 | | - | - | + |
| Rinse in water | | - | + | + |
| | | | | |
| pH of textile | | ? | 8.7 | 6.5 |
| Log reduction as per AATCC 100-2012, 1 hour contact time, E. coli | | -0.29 | 2.23 | 4.03 |
| Log reduction as per AATCC 100-2012, 24 hours contact time, E. coli. | | -0.35 | 1.11 | 2.29 |

The above results demonstrate the antimicrobial activity of the polycationic polymer polyvinyl amine (PVAm) of more than 2 log after 1 hour of contact time (more than 1 log after 24 hours). Also, the results show how the good antimicrobial activity of the PVAm treated textile can be even increased to more than 4 log after 1 hour of contact time by subjecting it to an acid (acidic acid) treatment.

### Example 2: Influence of acid treatment on the surface charge of the textile material coated with a polycationic polymer

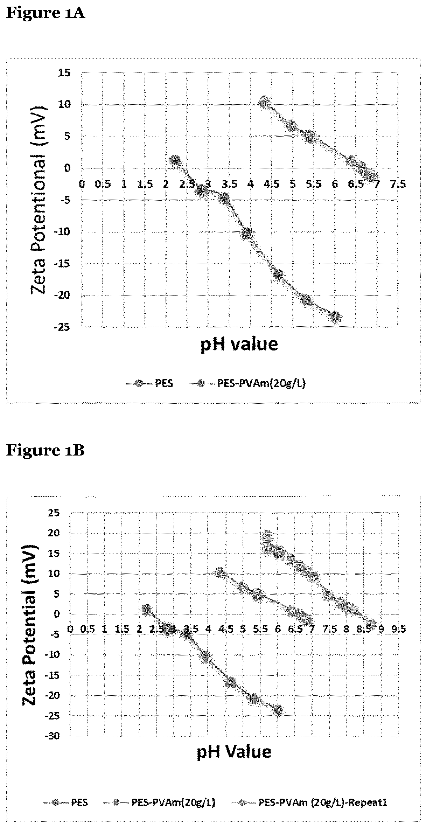

To test for the effect of the acid treatment on the surface charge of the textile material coated with a polycationic polymer, the inventors measured the zeta potential of an untreated polyester (PES) textile material and a polyvinyl amine (PVAm) coated textile material. The results are depicted in Figure 1A and 1B and show that for PVAm coated polyester textile ("PES-PVAm(20g/L)" and "PES-PVAm(20g/L)-Repeati"), the zeta potential remains positive even at neutral and alkaline pH values. At acidic pH values, the zeta potential is in the range of +10 mV as is summarized in below table 2.

**Table 2. The indicated values are average values of 5 independent measurements.**

| **Sample** | **Surface charge (zeta potential mV) @ pH 5.7** | **Surface charge (zeta potential mV) @ pH 6.5** | **Surface charge (zeta potential mV) @ pH 8** | **Isoelectric point (IEP)** |
|---|---|---|---|---|
| **PES-PVAm (20g/L) before washing** | + 18 | + 15 | +2 | 8.7 |
| **PES-PVAm (20g/L) after passing through Buffer and washing in DI water (50 ml**) | +12 | + 8 | -3 | 7.2 |

The shift in IEP to more acid values indicates that more carboxylic groups are available on the surface which shows some PVAm is leaching during the washing process.

The surface charge of Samples E1 to E3 of Example 1 was also measured and determined as shown in the below table 3.

**Table 3.**

| **Sample** | **E1** | **E2** | **E3** |
|---|---|---|---|
| pH of the fabric | - | 8.7 | 6.5 |
| Zeta potential (in mV) | -44 | +4 | +18 |

The results demonstrate the strong positive surface charge increase of the PVAm coated polyester textile following acetic acid treatment (rinsing).

## Claims

1. A method for manufacturing an antimicrobial textile material, comprising treating the textile material in a main liquor application cycle comprising the steps of:
- treating the textile material using a liquor application process, preferably exhaustion or padding, wherein the liquor comprises a polycationic polymer selected from the group consisting of polyvinyl amine (PVAm), polyallylamine (PAA), and polydiallylamine (PDAm);
- subjecting the treated textile material to a heat treatment;
wherein after the main liquor application cycle, the textile material is treated, preferably rinsed with an aqueous solution containing an acid.

2. The method of the preceding claim, wherein the liquor of the main liquor application cycle has a pH value of between 5.5 and 8.0, preferably 6.0 and 7.6, more preferably between 6.5 and 7.2, if the polycationic polymer is polyvinyl amine (PVAm); and wherein the liquor of the main liquor application cycle has a pH value of between 9.0 and 12.0, preferably between 10.0 to 11.5, more preferably between 10.5 and 11.2, if the polycationic polymer is polyallylamine (PAA), or polydiallylamine (PDAm).

3. The method of any one of the preceding claims, wherein the heat treatment of the main liquor application cycle comprises drying and/or curing, preferably drying and curing.

4. The method of any one of the preceding claims, wherein the acid is selected from acetic acid, citric acid, hydrochloric acid.

5. The method of any one of the preceding claims, wherein the pH of the acid containing aqueous solution is adjusted to between 4.5 and 6.8, preferably between 5 and 6.6, more preferably between 5.2 and 6.5.

6. The method of any one the preceding claims, wherein after the treatment with the acid containing aqueous solution, the pH of the textile material has a value of between 5 and 7, preferably between 5.5 and 6.8, most preferably between 6 and 6.5.

7. The method of any one of the preceding claims, wherein before the treatment with the acid containing aqueous solution, the pH of the textile material has a value of between more than 7, preferably at least 7.2, more preferably at least 7.5, even more preferably at least 8.0, and most preferably at least 8.5.

8. The method of any one of the preceding claims, wherein the treatment with the acid containing aqueous solution is performed in the same continuous process as the steps of the main liquor application cycle.

9. The method of any one of the preceding claims, wherein after the main liquor application cycle, the textile material is washed, preferably by rinsing the textile material with an aqueous solution, preferably water.

10. The method of the preceding claim, wherein the step of washing the textile material is performed prior to the treatment with the acid containing aqueous solution.

11. A textile material obtainable by the method of any one of the preceding claims.

12. A textile material, preferably of the preceding claim, to which an antimicrobial agent is adhered, wherein the antimicrobial agent is a polycationic polymer selected from the group consisting of polyvinyl amine (PVAm), polyallylamine (PAA), and pollydiallylamine (PDAm), and wherein the textile material has a pH of between 5 and 7, preferably between 5.5 and 6.8, most preferably between 6 and 6.5.

13. Use of the textile material according to any one of claims 11 to 12 for contact with food and beverages, in particular for manufacturing, processing and/or wrapping food and beverages.

14. A product like an incontinence pad, period panty, sanitary napkin panty, underwear liner, nappy, diaper, diaper liner, adult diaper, bed pad, or nursing pad comprising a textile material according to any one of claims 11 or 12.

15. A product comprising a textile material according to any one of claims 11 or 12, wherein the product is selected from air filter, water filter, face mask, gloves, medical gown, undergarment, socks, medical garment, military garment, airline personnel garment, T-shirt, bedding, bedsheets, pillow cover, quilt cover, curtains, children's clothing, school uniform, bathing towel, foot rug, upholstery, architectural fabrics, a tent or an awning, fitness gear, a fitness mat or a boxing glove, canine bed, bandages, or diapers for incontinence, kitchen or bakery textile, towel, apron or oven mitt.
